# EUROPÄISCHE PATENTANMELDUNG

(11) **EP 4 778 952 A1**
(43) Veröffentlichungstag der Anmeldung: **22.07.2026**
(21) Anmeldenummer: 25152501.0
(22) Anmeldetag: 17.01.2025
(51) Int. Cl.: C08G 18/08, C08G 18/10, C08G 18/24, C08G 18/32, C08G 18/38, C08G 18/42, C08G 18/48, C08G 18/50, C08G 18/79, C09D 175/06, C09D 175/08

(54) **HÄRTER AUF BASIS VON ISOPHORONDIISOCYANAT-OLIGOMEREN**

(71) Anmelder: Sika Technology AG, 6340 Baar (CH)
(72) Erfinder: BRUCHERTSEIFER, Christian, 70439 Stuttgart (DE); WALTHER, Burkhard, 83308 Trostberg (DE)
(74) Vertreter: Sika Patent Attorneys

(57) **Zusammenfassung**

Gegenstand der Erfindung ist ein Härter auf Basis von Isophorondiisocyanat-Oligomeren, umfassend 25 bis 70 Gewichts-% Isophorondiisocyanat-Oligomere, gegebenenfalls in Form von Umsetzungsprodukten mit mindestens einem Polyol, 25 bis 75 Gewichts-% Dimethacrylate der Formel (I), und 0 bis 30 Gewichts-% weitere Substanzen.

Der Härter wird bevorzugt verwendet zum Aushärten von Polyurethan- oder Polyharnstoff-Beschichtungen. Er ermöglicht lichtstabile Beschichtungen mit niedriger Viskosität, schneller Aushärtung, hoher Festigkeit bei hoher Dehnbarkeit und ausgezeichneter Witterungsstabilität.

## Beschreibung

### Technisches Gebiet

Die Erfindung betrifft einen Härter auf Basis von Isophorondiisocyanat-Oligomeren und dessen Verwendung für Polyurethan- oder Polyharnstoff-Beschichtungen.

### Stand der Technik

Isophorondiisocyanat (IPDI) ist ein kommerzielles, bei Raumtemperatur flüssiges aliphatisches Diisocyanat, welches in der Polyurethanindustrie als Härter breite Verwendung findet. Es ermöglicht Produkte mit langer Verarbeitungszeit, hoher Endfestigkeit, hoher Glasübergangstemperatur und hoher Witterungs- und UV-Stabilität. Um Produkte ohne Gefahrkennzeichnung zu erhalten, darf der Gehalt an freiem IPDI aber nicht mehr als 0.1 Gewichts-% betragen. Es gibt auch oligomere Formen von IPDI, insbesondere Trimere mit Isocyanuratgruppen. Produkte mit solchen IPDI-Oligomeren anstelle von monomerem IPDI benötigen keine Gefahrenkennzeichnung. IPDI-Oligomere sind bei Raumtemperatur aber fest und dadurch ist ihr Einsatz mit einigen Schwierigkeiten verbunden. Das Verwenden von organischen Lösemitteln zum Lösen der festen Oligomere ist zwar üblich, verursacht aber unerwünschte VOC-Emissionen. Eine weitere Möglichkeit ist das Lösen von IPDI-Oligomeren in einem Isocyanatgruppen-haltigen Polymer. Eine so erhaltene Zubereitung ist aber hochviskos und dadurch für Beschichtungen, welche in dünner Schicht oder mittels einem Spritzverfahren appliziert werden sollen, nicht geeignet.

WO 2021/123107 beschreibt Polyharnstoff-Beschichtungen mit bei Raumtemperatur flüssigen Derivaten von Diphenylmethandiisocyanat (MDI) als Härter. Solche Beschichtungen auf Basis von aromatischen Diisocyanaten weisen eine eingeschränkte Lichtstabilität auf und sind für viele Anwendungen nicht geeignet. US 2008/0229976 beschreibt Polyharnstoff-Beschichtungen mit Oligomeren von 1 ,6-Hexandiisocyanat (HDI) als Härter. HDI-Oligomere sind zwar bei Raumtemperatur flüssig und somit ohne organische Lösemittel einsetzbar. Die damit erreichbaren Lagerstabilitäten, Festigkeiten und Glasübergangstemperaturen sind aber limitiert, und in Bezug auf Witterungsstabilität sind solche Beschichtungen verbesserungsfähig.

US 2013/0337072 beschreibt Core-Shell-Partikel mit kontrollierter Freisetzung des antibiotischen Inhalts. Beispiel 1 beschreibt die Herstellung einer hydrophoben Lösung aus 3-lodo-2-propynylbutylcarbamat, Methylmethacrylat, Ethylenglykoldimethacrylat, IPDI Oligomer und Dilauroylperoxid. Eine solche Lösung ist nicht geeignet zum Aushärten von Polyurethan- oder Polyharnstoff-Beschichtungen.

### Darstellung der Erfindung

Aufgabe der vorliegenden Erfindung ist es daher, einen Härter auf Basis von Isophorondiisocyanat-Oligomeren zur Verfügung zu stellen, welcher die Nachteile des Standes der Technik in Bezug auf VOC-Emissionen und hohe Viskosität überwindet und den Einsatz von IPDI-Oligomeren in bei Raumtemperatur flüssiger Form zum Aushärten von Polyurethan- oder Polyharnstoff-Beschichtungen ermöglicht.

Überraschenderweise wird diese Aufgabe mit dem in Anspruch 1 beschriebenen Härter umfassend Isophorondiisocyanat-Oligomere und Dimethacrylate der Formel (I) gelöst. Die Dimethacrylate der Formel (I) sind sehr niedrigviskos und vermögen eine überraschend hohe Menge an IPDI-Oligomer auf einfache Weise zu lösen. Der erfindungsgemässe Härter weist eine überraschend niedrige Viskosität und eine sehr gute Lagerstabilität auf. Bei der Verwendung zum Aushärten von Polyurethan- oder Polyharnstoff-Beschichtungen verbleiben die Dimethacrylate mehrheitlich in der ausgehärteten Beschichtung, indem sie durch Autoxidation oder Reaktion mit Amingruppen zu höhermolekularen Verbindungen umgesetzt werden. Dadurch entstehen keine unerwünschten Emissionen.

Der Härter gemäss Anspruch 1 ermöglicht lichtstabile Polyurethan- oder Polyharnstoff-Beschichtungen mit sehr guter Lagerstabilität, geringem Geruch, niedriger Viskosität, schneller Aushärtung, hoher Festigkeit bei hoher Dehnbarkeit, hoher Glasübergangstemperatur und ausgezeichneter Witterungsstabilität. Solche Beschichtungen lassen sich als Spritzbeschichtung oder in dünner Schicht als selbstverlaufende Beschichtung gut applizieren und sind besonders geeignet als Topcoat.

Weitere Aspekte der Erfindung sind Gegenstand weiterer unabhängiger Ansprüche. Besonders bevorzugte Ausführungsformen der Erfindung sind Gegenstand der abhängigen Ansprüche.

### Wege zur Ausführung der Erfindung

Gegenstand der Erfindung ist ein Härter auf Basis von Isophorondiisocyanat-Oligomeren, umfassend bezogen auf den gesamten Härter
- 25 bis 70 Gewichts-% Isophorondiisocyanat-Oligomere, gegebenenfalls in Form von Umsetzungsprodukten mit mindestens einem Polyol,
- 25 bis 75 Gewichts-% Dimethacrylate der Formel (I), 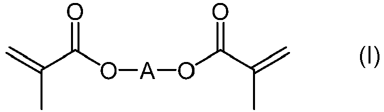 wobei A für einen zweiwertigen Alkylenrest mit 2 bis 12 C-Atomen oder für einen Polyetherrest mit 4 bis 14 C-Atomen steht, und
- 0 bis 30 Gewichts-% weitere Substanzen.

Als "Isophorondiisocyanat-Oligomere" werden Substanzen bezeichnet, bei welchen zwei, drei oder vier, insbesondere drei, Isophorondiisocyanat-Moleküle zu einem Polyisocyanat verbunden sind, wie insbesondere im Fall von Allophanaten, Isocyanuraten, Uretdionen oder Iminooxadiazindionen.

Mit "Poly" beginnende Substanznamen wie Polyamin, Polyol oder Polyisocyanat bezeichnen Substanzen, die zwei oder mehr der in ihrem Namen vorkommenden funktionellen Gruppen pro Molekül enthalten.

Als "primär" wird eine Amingruppe bezeichnet, die an einen einzigen organischen Rest gebunden ist und zwei Wasserstoffatome trägt, als "sekundär" wird eine Amingruppe bezeichnet, die an zwei organische Reste, welche auch gemeinsam Teil eines Rings sein können, gebunden ist und ein Wasserstoffatom trägt, und als "tertiär" wird eine Amingruppe bezeichnet, die an drei organische Reste, welche auch zu zweit oder zu dritt Teil eines oder mehrerer Ringe sein können, gebunden ist und kein Wasserstoffatom trägt.

Als "NCO-Gehalt" wird der Gehalt an Isocyanatgruppen in Gewichts-% bezeichnet. Als "organische Lösemittel" werden niedrigviskose organische Flüssigkeiten bezeichnet, die bei der Aushärtung von Polyurethan- oder Polyharnstoff-Beschichtungen nicht polymerisieren und nicht in die ausgehärtete Beschichtung eingebaut werden.

Als "lagerstabil" wird eine Zusammensetzung bezeichnet, wenn sie bei Raumtemperatur in einem geeigneten Gebinde während längerer Zeit, typischerweise während mindestens drei Monaten bis zu sechs Monaten und mehr, aufbewahrt werden kann, ohne dass sie sich in ihren Anwendungs- oder Gebrauchseigenschaften durch die Lagerung in einem für ihren Gebrauch relevanten Ausmass verändert.

Als "Molekulargewicht" wird die molare Masse (in Gramm pro Mol) eines Moleküls bezeichnet. Als "mittleres Molekulargewicht" wird das Zahlenmittel des Molekulargewichts (Mₙ) einer polydispersen Mischung von oligomeren oder polymeren Molekülen bezeichnet. Es wird mittels Gelpermeationschromatographie (GPC) gegen Polystyrol als Standard bestimmt.

Als "Verarbeitungszeit" wird die Zeitspanne zwischen dem Vermischens der Komponenten einer härtbaren Zusammensetzung und dem Gelieren der vermischten Zusammensetzung bezeichnet.

Als "Raumtemperatur" wird eine Temperatur von 23 °C bezeichnet.

Alle im Dokument erwähnten Industriestandards und Normen beziehen sich auf die zum Zeitpunkt der Einreichung der Erstanmeldung gültigen Fassungen. Gewichtsprozente (Gewichts-%) bezeichnen Massenanteile eines Bestandteils einer Zusammensetzung oder eines Moleküls, bezogen auf die gesamte Zusammensetzung oder das gesamte Molekül, falls nichts anderes angeben. Die Begriffe "Masse" und "Gewicht" werden im vorliegenden Dokument synonym benutzt.

Bevorzugt enthalten die Isophorondiisocyanat-Oligomere Isocyanuratgruppen. Zusätzlich können Uretdion- und/oder Iminooxadiazindion-Gruppen enthalten sein. Solche IPDI-Oligomere sind kommerziell in fester Form als Granulat erhältlich, beispielsweise als Vestanat^{®} T 1890/100 (von Evonik).

Ebenfalls erhältlich sind IPDI-Oligomere in flüssiger Form gelöst in einem organischen Lösemittel, wobei die Verwendung solcher Qualitäten im Rahmen dieser Erfindung unerwünscht ist, da damit erhebliche Mengen an organischen Lösemitteln eingeschleppt werden, die bei der Verwendung von damit formulierten Polyurethan- oder Polyharnstoff-Beschichtungen unerwünschte VOC Emissionen verursachen.

Bevorzugt ist das Dimethacrylat der Formel (I) ausgewählt aus der Liste bestehend aus 1,2-Ethandiol-dimethacrylat, 1,2-Propandiol-dimethacrylat, 1,3-Propandiol-dimethacrylat, 1,4-Butandiol-dimethacrylat, 1,5-Pentandiol-dimethacrylat, Neopentylglykol-dimethacrylat, 1,6-Hexandiol-dimethacrylat, 1,8-Octandiol-dimethacrylat, 1,10-Decandiol-dimethacrylat, 1,12-Dodecandiol-dimethacrylat, Diethylenglykol-dimethacrylat, Triethylenglykol-dimethacrylat, Tetraethylenglykol-dimethacrylat, Dipropylenglykol-dimethacrylat, Tripropylenglykol-dimethacrylat und Tetrapropylenglykol-dimethacrylat.

Der Rest A in Formel (I) steht bevorzugt für einen zweiwertigen Alkylenrest mit 2 bis 6 C-Atomen oder für einen Polyetherrest mit 4 bis 6 C-Atomen.

Besonders bevorzugt ist das Dimethacrylat der Formel (I) somit ausgewählt aus der Liste bestehend aus 1,2-Ethandiol-dimethacrylat, 1,2-Propandiol-dimethacrylat, 1,3-Propandiol-dimethacrylat, 1,4-Butandiol-dimethacrylat, 1,5-Pentandiol-dimethacrylat, Neopentylglykol-dimethacrylat, 1,6-Hexandiol-dimethacrylat, Diethylenglykol-dimethacrylat, Triethylenglykol-dimethacrylat und Dipropylenglykol-dimethacrylat.

Davon ganz besonders bevorzugt ist 1,2-Ethandiol-dimethacrylat, 1,4-Butandiol-dimethacrylat oder Triethylenglykol-dimethacrylat.

Mit 1,2-Ethandiol-dimethacrylat oder 1,4-Butandiol-dimethacrylat lassen sich IPDI-Oligomere einfach und schnell lösen und es entstehen Härter mit besonders niedriger Viskosität.

Mit Triethylenglykol-dimethacrylat lassen sich IPDI-Oligomere ganz besonders einfach und schnell lösen und es entstehen Härter mit sehr niedriger Viskosität.

Bevorzugt liegt der NCO-Gehalt bezogen auf den gesamten Härter im Bereich von 4.3 bis 12.1 Gewichts-%, insbesondere 5 bis 11 Gewichts-%. Der NCO-Gehalt wird insbesondere bestimmt durch Umsetzung der Isocyanatgruppen mit einem Überschuss Dibutylamin und Rücktitration des nicht umgesetzten Dibutylamins mit wässriger Salzsäure.

Bevorzugt hat der Härter eine Viskosität bei 23 °C von 0.1 bis 10 Pas, bevorzugt 0.2 bis 5 Pas, bestimmt mittels Kegel-Platte Rotationsviskosimeter mit einer Scherrate 50 s⁻¹.

In einer bevorzugten Ausführungsform der Erfindung enthält der Härter Isophorondiisocyanat-Oligomere anteilig in Form von Umsetzungsprodukten mit mindestens einem Polyol, bevorzugt mit mindestens einem Diol mit einer OH-Zahl von 28 bis 280 mg KOH/g, insbesondere 56 bis 180 mg KOH/g.

Bevorzugt erfolgte die Umsetzung in Gegenwart des Dimethacrylats der Formel (I), in welchem die IPDI-Oligomere gelöst sind.

Bevorzugt erfolgte die Umsetzung in einem molaren NCO/OH Verhältnis von mindestens 5/1, bevorzugt in einem molaren NCO/OH Verhältnis von 5/1 bis 25/1, insbesondere 6/1 bis 20/1.

Bevorzugt erfolgte die Umsetzung bei einer Temperatur von 20 bis 140 °C, insbesondere 40 bis 120 °C, gegebenenfalls in Anwesenheit eines geeigneten Katalysators.

Ein solcher Härter enthält Umsetzungsprodukte von IPDI-Oligomeren mit Diolen, nicht umgesetzte IPDI-Oligomere und Dimethacrylate der Formel (I). Typische Umsetzungsprodukte weisen dabei die Formel (II) auf, wobei P für den Rest des Diols nach Entfernung der beiden OH-Gruppen und D für den Rest von Isophorondiisocyanat nach Entfernung der beiden NCO-Gruppen stehen.

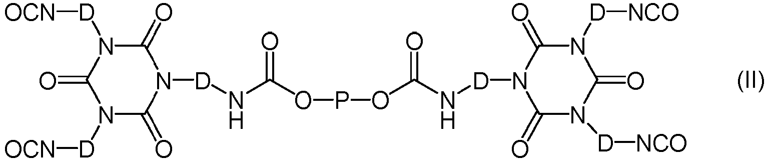

Ein Härter enthaltend solche Umsetzungsprodukte der Formel (II) ermöglicht Polyurethan- oder Polyharnstoff-Beschichtungen mit besonders hoher Dehnbarkeit.

Bevorzugt ist das Diol ausgewählt aus der Liste bestehend aus Polyetherdiolen, Polyesterdiolen und Polycarbonatdiolen.

Besonders bevorzugt sind Polyetherdiole, insbesondere mit Repetierenheiten ausgewählt aus Oxy-1,2-propylen, Oxy-1,3-propylen, Oxy-1,4-butylen, Oxy-1,2-butylen und Oxyphenylethylen. Zusätzlich können Oxyethylen Einheiten vorhanden sein, insbesondere höchstens 25 Gewichts-% Oxyethylen-Einheiten bezogen auf das Gesamtgewicht des Polyetherdiols.

Bevorzugt sind Poly(oxy-1,2-propylen)diole, Ethylenoxid-terminierte Poly(oxy-1,2-propylen)diole, Poly(oxy-1,3-propylen)diole oder Poly(oxy-1,4-butylen)diole. Am meisten bevorzugt sind Poly(oxy-1,2-propylen)diole.

Weiterhin besonders bevorzugt sind Polyesterdiole, insbesondere bei Raumtemperatur flüssige Umsetzungsprodukte von Dicarbonsäuren wie insbesondere Bernsteinsäure, Glutarsäure, Adipinsäure, Pimelinsäure, Korksäure, Azelainsäure, Sebacinsäure oder Dodecandicarbonsäure, mit Alkoholen wie insbesondere 1,2-Ethandiol, Diethylenglykol, 1,2-Propandiol, 1,3-Propandiol, 2-Methyl-1,3-propandiol, Dipropylenglykol, 1,4-Butandiol, 1,5-Pentandiol, 3-Methyl-1,5-pentandiol, 1,6-Hexandiol, Neopentylglykol, 1,3-Cyclohexandimethanol, 1,4-Cyclohexandimethanol oder Isosorbid.

Bevorzugt enthält der Härter bezogen auf den gesamten Härter
- 40 bis 65 Gewichts-% Isophorondiisocyanat-Oligomere, gegebenenfalls in Form von Umsetzungsprodukten mit mindestens einem Diol mit einer OH-Zahl von 28 bis 280 mg KOH/g, bevorzugt 56 bis 180 mg KOH/g,
- 30 bis 60 Gewichts-%, insbesondere 40 bis 55 Gewichts-%, Dimethacrylate der Formel (I), und
- 0 bis 20 Gewichts-%, bevorzugt 0 bis 10 Gewichts-%, insbesondere 0 bis 5 Gewichts-%, weitere Substanzen

Als weitere Substanzen geeignet sind insbesondere weitere Polyisocyanate, Farbstoffe, Füllstoffe, Pigmente, Weichmacher oder Additive wie insbesondere Netzmittel, Verlaufmittel, Entschäumer oder Entlüfter.

Als weiteres Polyisocyanat geeignet ist insbesondere ein Oligomer von 1,6-Hexandiisocyanat, insbesondere ein Isocyanurat.

Als Füllstoff, Pigment oder Weichmacher geeignet sind insbesondere die im Folgenden als mögliche Bestandteile von Polyurethan- oder Polyharnstoff-Beschichtungen genannten.

Bevorzugt enthält der Härter keine oder nur einen sehr geringen Gehalt an organischen Lösemitteln mit einem Siedepunkt bei Normaldruck von weniger als 250 °C. Bevorzugt enthält der Härter bezogen auf den gesamten Härter weniger als 1 Gewichts-%, bevorzugt weniger als 0.5 Gewichts-%, insbesondere weniger als 0.1 Gewichts-%, solche organische Lösemittel. Dies ermöglicht Polyurethan- oder Polyharnstoff-Beschichtungen mit sehr geringer Emission.

Solche in erheblicher Menge unerwünschte Lösemittel sind insbesondere Aceton, Methylethylketon, Methylisobutylketon, Acetylaceton, Cyclohexanon, Butylacetat, Methoxypropylacetat, Dibutylether, Toluol, Xylol, Octan, Naphtha, White Spirit oder Petrolether.

Ein weiterer Gegenstand der Erfindung ist ein Verfahren zum Herstellen des beschriebenen Härters, umfassend die Schritte
(i) Vorlegen des Dimethacrylats der Formel (I),
(ii) Zugeben der Isophorondiisocyanat-Oligomere,
(iii) Rühren der Mischung, bis die Isophorondiisocyanat-Oligomere vollständig gelöst sind,
(iv) gegebenenfalls Zugeben von mindestens einem Polyol und Reagieren lassen, bis alle OH-Gruppen umgesetzt sind.

Die Schritte (ii) und (iii) können bei Umgebungstemperatur oder bei erhöhter Temperatur durchgeführt werden, insbesondere bei einer Temperatur von 15 bis 100 °C, bevorzugt bei 20 bis 90 °C, insbesondere bei 40 bis 80 °C.

Falls Schritt (iv) durchgeführt wird, kann dieser direkt anschliessend an Schritt (iii), erfolgen, oder der aus Schritt (iii) erhaltene Härter wird in einem feuchtigkeitsdicht verschlossenen Gebinde bis zur Durchführung von Schritt (iv) aufbewahrt. Bevorzugt erfolgt Schritt (iv) bei einer Temperatur von 20 bis 120 °C, insbesondere 40 bis 100 °C, gegebenenfalls in Anwesenheit eines geeigneten Katalysators. Bevorzugt wird in Schritt (iv) eine solche Menge Polyol zugegeben, dass das molare NCO/OH Verhältnis mindestens 5/1, insbesondere 5/1 bis 25/1, bevorzugt 6/1 bis 20/1, beträgt. Dadurch wird ein erheblicher Teil der IPDI-Oligomere nicht umgesetzt und der erhaltene Härter weist schliesslich eine niedrige, gut handhabbare Viskosität auf.

Der erhaltene Härter wird bis zur Verwendung in einem feuchtigkeitsdicht verschlossenen Gebinde aufbewahrt.

Der erhaltene Härter ist lagerstabil. Er kann bis zur Verwendung während mehreren Monate bis zu sechs Monaten und mehr bei Raumtemperatur aufbewahrt werden, ohne seine Anwendbarkeit zu verlieren.

Der Härter ist niedrigviskos und enthält aliphatisch gebundene Isocyanatgruppen. Dadurch ist er besonders geeignet zum Aushärten von Zusammensetzungen enthaltend Reaktivgruppen, welche mit Isocyanatgruppen reaktiv sind. Insbesondere ist der Härter geeignet zum Aushärten von Polyurethan- oder Polyharnstoff-Beschichtungen.

Ein weiterer Gegenstand der Erfindung ist die Verwendung des beschriebenen Härters zum Aushärten einer Zusammensetzung enthaltend Reaktivgruppen ausgewählt aus Hydroxylgruppen, primären Amingruppen, sekundären Amingruppen, Aldimingruppen, Ketimingruppen und Oxazolidingruppen.

Im Fall von Aldimingruppen, Ketimingruppen oder Oxazolidingruppen benötigt die Aushärtung zusätzlich Feuchtigkeit.

Dabei liegt das Verhältnis der Anzahl Isocyanatgruppen zur Summe aus der Anzahl Hydroxylgruppen, primärer Amingruppen, sekundärer Amingruppen, Aldimingruppen, Ketimingruppen und Oxazolidingruppen bevorzugt im Bereich von 0.5 bis 1.5, insbesondere 0.8 bis 1.3.

Bevorzugt wird der Härter verwendet zum Aushärten einer Zusammensetzung enthaltend primäre oder sekundäre Amingruppen. Dabei liegt das Verhältnis zwischen der Anzahl Isocyanatgruppen und der Anzahl primäre oder sekundäre Amingruppen bevorzugt unterhalb von 1. Somit können von Isocyanatgruppen nicht umgesetzte Amingruppen mit Methacrylatgruppen reagieren, wodurch zumindest ein Teil der vorhandenen Dimethacrylate ins ausgehärtete Polymer eingebunden wird.

Bevorzugt enthält die Zusammensetzung einen Katalysator für die Autoxidation von Methacrylaten, insbesondere einen Kupfer-, Eisen- oder Zink-Katalysator. Dies verhindert die Freisetzung von Dimethacrylat der Formel (I) aus der ausgehärteten Zusammensetzung.

Ein weiterer Gegenstand der Erfindung ist eine härtbare Beschichtung umfassend
- eine erste Komponente enthaltend mindestens ein Polyol und/oder mindestens ein Polyamin mit mindestens zwei primären oder sekundären Amingruppen, und
- eine zweite Komponente enthaltend den oder bestehend aus dem beschriebenen Härter.

Geeignet als Polyol sind insbesondere
- Polyetherpolyole, insbesondere Polyoxyalkylendiole und/oder Polyoxyalkylentriole, insbesondere Polymerisationsprodukte von Ethylenoxid oder 1,2-Propylenoxid oder 1,2- oder 2,3-Butylenoxid oder Oxetan oder Tetrahydrofuran oder Mischungen davon, polymerisiert mit Hilfe eines Startermoleküls mit zwei oder mehreren aktiven Wasserstoffatomen, sowie Polyetherpolyole mit darin dispergierten Styrol-Acrylnitril-Partikeln (SAN) oder Polyharnstoff- bzw. Polyhydrazodicarbonamid-Partikeln (PHD). Bevorzugte Polyetherpolyole sind Polyoxypropylendiole, Polyoxypropylentriole oder Ethylenoxid-terminierte Polyoxypropylendiole oder -triole, welche nach Abschluss der Polypropoxylierungsreaktion mit Ethylenoxid weiter alkoxyliert wurden und dadurch schliesslich primäre Hydroxylgruppen aufweisen. Bevorzugte Polyetherpolyole weisen einen Ungesättigtheitsgrad von weniger als 0.02 meq/g, insbesondere weniger als 0.01 meq/g, auf.
- Polyesterpolyole, insbesondere aus der Polykondensation von Hydroxycarbonsäuren, aus Lactonen wie insbesondere ε-Caprolacton mit zwei- oder dreiwertigen Alkoholen als Starter, oder insbesondere aus der Veresterung von zwei- oder dreiwertigen Alkoholen mit organischen Dicarbonsäuren.
- Polycarbonatpolyole, insbesondere aus der Umsetzung von zwei- oder dreiwertigen Alkoholen mit Dialkylcarbonaten, Diarylcarbonaten oder Phosgen.
- Polyetherpolyesterpolyole,
- Polyacrylat- oder Polymethacrylatpolyole,
- Polyhydroxyfunktionelle Fette und Öle, beispielsweise natürliche Fette und Öle, inbesondere Ricinusöl oder Derivate von Ricinusöl, oder
- Polykohlenwasserstoffpolyole, insbesondere Polybutadienpolyole.

Besonders bevorzugt sind Polyoxypropylendiole oder -triole oder Ethylenoxid-terminierte Polyoxypropylendiole oder -triole.

Bevorzugt sind Polyole mit einer OH-Zahl von 28 bis 550 mg KOH/g.

Weiterhin geeignet als Polyol sind sogenannte Kettenverlängerer, wie insbesondere 1,2-Ethandiol, 1,3-Propandiol, 2-Methyl-1,3-propandiol, 1,4-Butandiol, 1,5-Pentandiol, Neopentylglykol, 1,6-Hexandiol, 3-Methyl-1,5-pentandiol, 1,7-Heptandiol, 1,8-Octandiol, 1,3-Cyclohexandimethanol, 1,4-Cyclohexandimethanol, Diethylenglykol oder Triethylenglykol. Solche Kettenverlängerer sind bevorzugt in Kombination mit mindestens einem der vorgenannten polymeren Polyole vorhanden.

Bevorzugt enthält die erste Komponente mindestens ein Polyamin mit mindestens zwei primären oder sekundären Amingruppen.

Geeignete solche Polyamine sind insbesondere
- aromatische Diamine, wie insbesondere 1,3-Phenylendiamin, 1,4-Phenylendiamin, 2,4(6)-Toluendiamin, 3,5-Diethyl-2,4(6)-toluendiamin (DETDA), 3,5-Di-methylthio-2,4(6)-toluendiamin, 4,4'-Diaminodiphenylmethan (MDA), 3,3',5,5'-Tetraethyl-4,4'-diaminodiphenylmethan, oder aromatische Diamine mit sekundären Amingruppen, beispielsweise erhältlich unter dem Handelsnamen Unilink^{®} (von Palmer Holland), insbesondere N,N'-Bis(2-butyl)-1,4-phenylendiamin oder N,N'-Bis(2-butyl)-4,4'-diaminodiphenylmethan,
- Bisaminobenzoate von Poly(oxy-1,4-butylen)diolen, beispielsweise erhältlich unter dem Handelsnamen Versalink^{®} P (von Evonik),
- Polyaspartate, beispielsweise erhältlich unter dem Handelsnamen Desmophen^{®} NH (von Covestro),
- Polyetherdiamine oder-triamine, beispielsweise erhältlich unter dem Handelsnamen Jeffamine^{®} D oder T (von Huntsman), insbesondere Polyoxypropylendiamine mit mittlerem Molekulargewicht Mₙ von 200 bis 4'000 g/mol oder Polyoxypropylentriamine mit mittlerem Molekulargewicht Mₙ von 300 bis 5'000 g/mol,
- Polyetherdiamine oder -triamine mit sekundären Amingruppen, beispielsweise erhältlich unter dem Handelsnamen Jeffamine^{®} SD oder ST (von Huntsman),
- Polyaminoamide, insbesondere aus der Kondensation von Dimerfettsäuren mit Polyaminen, beispielsweise erhältlich unter Handelsnamen wie Versamid^{®} (von Huntsman) oder Merginamid^{®} (von Worlée),
- Dimerfettsäure basierte Amine, beispielsweise erhältlich unter dem Handelsnamen Priamine^{®} (von Cargill), sowie
- handelsübliche Diamine mit aliphatisch gebundenen Amingruppen, wie insbesondere N,N'-Bis(2-propyl)isophorondiamin, N,N'-Dibenzyl-1,2-ethandiamin, N-Benzyl-1,2-ethandiamin, N-Methyl-1,3-propandiamin, Isophorondiamin, 1,5-Pentandiamin, 1,6-Hexandiamin, 2,2(4),4-Trimethyl-1,6-hexandiamin, 1,3-Bis-(aminomethyl)cyclohexan, 1,4-Bis(aminomethyl)cyclohexan, 1,2-Diaminocyclohexan, 1,3-Diaminocyclohexan, 1,4-Diaminocyclohexan, 2(4)-Methyl-1,3-diaminocyclohexan, Bis(4-aminocyclohexyl)methan, Bis(4-amino-3-methylcyclohexyl)methan oder 1,3-Bis(aminomethyl)benzol.

Zusätzlich zu mindestens einem Polyamin mit mindestens zwei primären oder sekundären Amingruppen kann die erste Komponente mindestens ein Aldimin oder Ketimin oder Oxazolidin enthalten, insbesondere mindestens ein Aldimin. Eine solche Beschichtung verfügt über eine längere Verarbeitungszeit.

Geeignete Aldimine sind insbesondere abgeleitet von Isophorondiamin, 1,5-Pentandiamin, 1,6-Hexandiamin, 2,2(4),4-Trimethyl-1,6-hexandiamin, 1,3-Bis-(aminomethyl)cyclohexan, 1,4-Bis(aminomethyl)cyclohexan, 1,2-Diaminocyclohexan, 1,3-Diaminocyclohexan, 1,4-Diaminocyclohexan, 2(4)-Methyl-1,3-diaminocyclohexan, Bis(4-aminocyclohexyl)methan oder 1,3-Bis(aminomethyl)-benzol, und Aldehyden wie insbesondere Isobutyraldehyd, Pivalaldehyd, 2-Methylbutanal, 2-Ethylbutanal, 2-Methylpentanal, 2-Ethylhexanal, Octanal, Nonanal, Decanal, Undecanal, 2-Methyl-undecanal, Dodecanal, 2-Phenylpropanal, Cyclopentancarboxaldehyd, Cyclohexancarboxaldehyd, Benzaldehyd oder einem substituierten Benzaldehyd.

Besonders bevorzugt ist N,N'-Diisobutylidenisophorondiamin, kommerziell erhältlich als Vestamin^{®} A-139 (von Evonik), oder N,N'-Dibenzylidenpolyoxypropylen-diamin mit mittlerem Molekulargewicht Mₙ von 400 bis 600 g/mol, kommerziell erhältlich als Aldirez^{®} BH (von Incorez).

Ebenfalls möglich sind Beschichtungen, welche in der ersten Komponente eine Kombination aus mindestens einem der genannten Polyole und mindestens einem Polyamin und/oder mindestens einem Aldimin enthalten, wobei als Polyamin oder Aldimin die bereits genannten bevorzugt sind.

Bevorzugt enthält die erste Komponente mindestens einen Kupfer-, Eisen- oder Zink-Katalysator. Ein solcher Katalysator katalysiert die Autoxidation von Methacrylaten. Dadurch wird die Freisetzung von Dimethacrylaten der Formel (I) aus der ausgehärteten Beschichtung verhindert.

Bevorzugt enthält die härtbare Beschichtung mindestens einen weiteren Bestandteil ausgewählt aus der Liste bestehend aus Katalysatoren, Füllstoffen, Pigmenten, Haftvermittlern, Stabilisatoren, Entschäumern und Netzmitteln.

Geeignete Katalysatoren sind insbesondere Katalyatoren für die Reaktion von Hydroxylgruppen mit Isocyanatgruppen, insbesondere eine Organozinn(IV)-Verbindung wie insbesondere Dibutylzinndiacetat, Dibutylzinndilaurat, Dibutylzinndichlorid, Dibutylzinndiacetylacetonat, Dimethylzinndilaurat, Dioctylzinndiacetat, Dioctylzinndilaurat oder Dioctylzinndiacetylacetonat, Verbindungen von Eisen(III), Bismut(III) oder Zirkonium(IV), insbesondere Komplexverbindungen, oder Stickstoff-haltige Verbindungen wie insbesondere 1,4-Diazabicyclo[2.2.2]-octan (DABCO), 1,8-Diazabicyclo[5.4.0]undec-7-en (DBU) oder 1,5-Diazabicyclo-[4.3.0]non-5-en (DBN). Bevorzugt sind solche Katalysatoren Bestandteil einer ersten Komponente, welche Polyole enthält.

Geeignete Katalysatoren sind weiterhin Katalysatoren für die Hydrolyse von Aldimingruppen, insbesondere organische Säuren, insbesondere eine aromatische Carbonsäure wie 2-Nitrobenzoesäure oder Salicylsäure. Bevorzugt sind solche Katalysatoren Bestandteil einer ersten Komponente, welche Aldimine enthält.

Geeignete Füllstoffe sind insbesondere gemahlene oder gefällte Calciumcarbonate, welche gegebenenfalls mit Fettsäuren, insbesondere Stearaten, beschichtet sind, Baryte (Schwerspate), Quarzmehle, Quarzsande, Dolomite, Wollastonite, Kaoline, calcinierte Kaoline, Kieselsäure, Kieselsäure-Kaolinite, calcinierte Kieselsäure-Kaolinite, Schichtsilikate wie Glimmer oder Talk, Zeolithe, Aluminiumhydroxide, Magnesiumhydroxide, hochdisperse Kieselsäuren aus Pyrolyseprozessen, industriell hergestellte Russe, Graphit, gemahlene Füllstoffe aus landwirtschaftlichen Quellen wie insbesondere Olivenkernmehl oder Nussschalenmehl, MetallPulver, beispielsweise von Aluminium, Kupfer, Eisen, Silber oder Stahl, PVC-Pulver oder Hohlkugeln. Besonders bevorzugt sind Calciumcarbonate, Baryte, Quarzmehle, Quarzsande, Kaoline oder Aluminiumhydroxide.

Geeignete Pigmente sind insbesondere Titandioxid, Chromoxid, Eisenoxide oder organische Pigmente. Pigmente können eingesetzt werden als pastöse Zubereitung, auch Farbpaste genannt, insbesondere als Dispersion in einem Dimethacrylat.

Geeignete Haftvermittler sind insbesondere Titanate oder Organoalkoxysilane wie insbesondere Epoxysilane, insbesondere 3-Glycidoxypropyltrimethoxysilan oder 3-Glycidoxypropyltriethoxysilan, Aminosilane, Iminosilane, Mercaptosilane, Vinylsilane, (Meth)acrylosilane, Carbamatosilane, Alkylsilane, S-(Alkylcarbonyl)mercaptosilane oder oligomere Formen dieser Silane.

Geeignete Stabilisatoren sind insbesondere Stabilisatoren gegen Oxidation, Wärme, Licht oder UV-Strahlung.

Die härtbare Beschichtung kann weitere für Polyurethan-Beschichtungen gebräuchliche Bestandteile enthalten, insbesondere
- Trocknungsmittel, insbesondere Molekularsiebe, Calciumoxid, Mono-Oxazolidine wie Incozol^{®} 2 (von Incorez), Orthoester oder Alkoxysilane;
- Weichmacher, insbesondere Phthalate, insbesondere Diisononylphthalat (DINP), Diisodecylphthalat (DIDP) oder Di(2-propylheptyl)phthalat (DPHP), hydrierte Phthalate, insbesondere Diisononyl-1,2-cyclohexandicarboxylat (DINCH), Terephthalate, hydrierte Terephthalate, Isophthalate, Trimellitate, Adipate, insbesondere Dioctyladipat (DOA), Azelate, Sebacate, Benzoate, Glycolether, Glycolester, Weichmacher mit Polyetherstruktur, insbesondere Polypropylenoxidmonole, -diole oder -triole mit blockierten Hydroxylgruppen, insbesondere in der Form von Acetatgruppen, oder organische Sulfonate oder Phosphate, insbesondere Diphenylkresylphosphat (DPK) oder Tris-2-ethylhexylphosphat (TOF), Polybutene, Polyisobutene oder von natürlichen Fetten oder Ölen abgeleitete Weichmacher, insbesondere Rapsölmethylester,
- Rheologie-Modifizierer, insbesondere Harnstoffverbindungen, Schichtsilikate wie Bentonite, Derivate von Rizinusöl, hydriertes Rizinusöl, Polyamide, Polyurethane, pyrogene Kieselsäuren oder hydrophob modifizierte Polyoxyethylene,
- Fasern, insbesondere Glasfasern, Kohlefasern, Metallfasern, Keramikfasern, Hanffasern, Zellulosefasern oder Kunststofffasern wie Polyamidfasern oder Polyethylenfasern,
- Nanofüllstoffe oder Nanofasern wie Graphen oder Carbon Nanotubes,
- flammhemmende Substanzen, insbesondere die bereits genannten Füllstoffe Aluminiumhydroxid oder Magnesiumhydroxid, oder organische Phosphorsäureester oder Ammoniumpolyphosphate,
sowie weitere üblicherweise in härtbaren Beschichtungen eingesetzte Substanzen. Es kann sinnvoll sein, gewisse Substanzen vor der Verwendung chemisch oder physikalisch zu trocknen.

Die genannten weiteren Bestandteile können in der ersten und/oder der zweiten Komponente vorhanden sein. Mit Isocyanatgruppen reaktive Bestandteile sind bevorzugt in der ersten Komponente.

Die erste und die zweite Komponenten der härtbaren Beschichtung werden getrennt voneinander hergestellt. Dabei werden die Inhaltsstoffe der jeweiligen Komponente miteinander vermischt, so dass eine makroskopisch homogene Flüssigkeit oder Paste entsteht. Die erste und die zweite Komponente werden in voneinander getrennten Gebinden gelagert und sind jeweils für sich allein lagerstabil.

Für die Applikation und Aushärtung der härtbaren Beschichtung werden die beiden Komponenten miteinander vermischt.

Das Mischungsverhältnis wird insbesondere so gewählt, dass das Verhältnis der Anzahl Isocyanatgruppen zur Summe aus der Anzahl der vorhandenen Hydroxylgruppen, primären Amingruppen, sekundären Amingruppen, Aldimingruppen, Ketimingruppen und Oxazolidingruppen im bevorzugten Bereich liegt. In Gewichtsteilen liegt das Mischungsverhältnis zwischen der ersten und der zweiten Komponente bevorzugt im Bereich von 10:1 bis 1:10, insbesondere 5:1 bis 1:2.

Das Mischen der Komponenten erfolgt mit einer geeigneten Methode, insbesondere mittels einem handelsüblichen Rührwerk oder in einer Mehrkomponenten-Dosier- und Mischanlage.

Das Mischen erfolgt bevorzugt bei Umgebungstemperatur oder erhöhter Temperatur, insbesondere bei einer Temperatur von 15 bis 80 °C.

Mit dem Vermischen der Komponenten beginnt die härtbare Beschichtung durch die einsetzende chemische Reaktion auszuhärten. Dabei reagieren vorhandene Hydroxylgruppen und primäre und sekundäre Amingruppen mit vorhandenen Isocyanatgruppen. Vorhandene Aldimingruppen, Ketimingruppen oder Oxazolidingruppen reagieren bei Kontakt mit Feuchtigkeit unter Hydrolyse ebenfalls mit Isocyanatgruppen. Weitere vorhandene Isocyanatgruppen reagieren schliesslich mit Feuchtigkeit. Weiter vorhandene primäre oder sekundäre Amingruppen können mit Methacrylatgruppen reagieren.

Die Aushärtung erfolgt bevorzugt bei Umgebungstemperatur, bevorzugt bei einer Temperatur im Bereich von 5 bis 50°C, insbesondere 10 bis 40°C.

Ein weiterer Gegenstand der Erfindung ist die ausgehärtete Beschichtung, erhalten aus der härtbaren Beschichtung nach dem Vermischen der Komponenten, Applizieren der vermischten flüssigen Zusammensetzung auf mindestens ein Substrat und anschliessendem Aushärten.

Bevorzugt weist die ausgehärtete Beschichtung eine Zugfestigkeit von mindestens 3 MPa, bevorzugt mindestens 6 MPa, auf.

Bevorzugt weist die ausgehärtete Beschichtung eine Bruchdehnung von mindestens 5 %, bevorzugt mindestens 20 %, insbesondere mindestens 50 %, auf.

Dabei sind die Zugfestigkeit und die Bruchdehnung bestimmt gemäss DIN 53504 an während 7 Tagen im Normklima ausgehärteten Filmen mit einer Schichtdicke von 2 mm mit Prüfkörpern vom Typ S2.

Die Applikation der vermischten Beschichtung kann, abhängig von der Verarbeitungszeit, auf verschiedene Weise erfolgen. Die Verarbeitungszeit ist insbesondere abhängig von den vorhandenen Reaktivgruppen, Katalysatoren und der herrschenden Temperatur.

Beschichtungen mit primären, aliphatisch gebundenen Amingruppen zeigen eine sehr kurze Verarbeitungszeit. Das Vorhandensein von Aldiminen ermöglicht eine etwas längere Verarbeitungszeit. Beschichtungen mit vorwiegend Polyolen zeigen eine deutlich längere Verarbeitungszeit.

Beschichtungen mit einer Verarbeitungszeit von einigen Sekunden bis zu wenigen Minuten werden vorteilhaft mittels einer Spritzapparatur appliziert. Beschichtungen mit einer Verarbeitungszeit ab etwa 15 Minuten können in einem Rührwerk vermischt und von Hand appliziert werden, insbesondere mittels Rolle oder Rakel, oder aus Zweikomponentenkartuschen mit aufgesetztem Statikmischer, oder ebenfalls mittels einer Spritzapparatur.

Geeignete Substrate, auf welche die Applikation der Beschichtung erfolgt, sind insbesondere
- Beton, Mörtel, Zementestrich, Faserzement, Backstein, Ziegel, Gips oder Natursteine wie Granit oder Marmor,
- Reparatur- oder Nivelliermassen auf Basis PCC (Polymer-modifizierter Zementmörtel) oder ECC (Epoxidharz-modifizierter Zementmörtel),
- Metalle oder Legierungen wie Aluminium, Eisen, Stahl, Kupfer, weitere Buntmetalle, inklusive oberflächenveredelte Metalle oder Legierungen wie verzinkte oder verchromte Metalle,
- Asphalt oder Bitumen,
- Kunststoffe wie Hart- und Weich-PVC, Polycarbonat, Polystyrol, Polyester, Polyamid, PMMA, ABS, SAN, Epoxidharze, Phenolharze, PUR, POM, TPO, PE, PP, EPM oder EPDM, jeweils unbehandelt oder oberflächenbehandelt, beispielsweise mittels Plasma, Corona oder Flammen,
- faserverstärkte Kunststoffe, wie Kohlefaser-verstärkte Kunststoffe (CFK), Glasfaser-verstärkte Kunststoffe (GFK), Naturfaser-verstärkte Kunststoffe (NFK) und Sheet Moulding Compounds (SMC),
- Holz, mit Harzen, beispielsweise Phenol-, Melamin- oder Epoxidharzen, gebundene Holzwerkstoffe, Harz-Textil-Verbundwerkstoffe oder weitere sogenannte Polymer-Composites,
- Isoliermaterialen, insbesondere Schäume, insbesondere aus EPS, XPS, PUR, PIR, Aerogel oder geschäumtes Glas (Foamglas), oder Fasern aus Steinwolle oder Glaswolle,
- beschichtete oder lackierte Substrate, insbesondere lackierte Fliesen, gestrichener Beton, pulverbeschichtete Metalle oder Legierungen oder lackierte Bleche,
- Beschichtungen, Farben oder Lacke,
- Glas oder Glaskeramik,
- Leder, Textilien oder Papier.

Die Substrate sind bevorzugt frei von Öl, Fett oder Staub. Sie können bei Bedarf vorbehandelt sein, insbesondere durch physikalische und/oder chemische Reinigungsverfahren oder das Aufbringen eines Aktivators oder eines Primers.

Bevorzugt wird die Beschichtung in einer Schichtdicke von 0.1 bis 8 mm, bevorzugt 0.2 bis 4 mm, appliziert.

Die härtbare Beschichtung wird bevorzugt verwendet als elastische bis zähelastische Schutzbeschichtung, insbesondere zum Schutz vor dem Eindringen von Feuchtigkeit, Wasser oder weiteren Flüssigkeiten oder Chemikalien, als Schutz vor mechanischer Beanspruchung, sowie als Schutz von Metallen oder Kunststoffen vor Korrosion oder Schäden durch UV-Strahlung.

Bevorzugt wird die Beschichtung verwendet als Dachbeschichtung, Brückenbeschichtung, Balkon- oder Terrassenbeschichtung, zum Abdichten von Bauwerken, insbesondere Fundamenten, als Bodenbeschichtung in Parkhäusern, Garagen, Kellern, Lagerhallen oder Industriehallen, in der Lebensmittelindustrie, in Küchen oder Spitälern, als Schutzbeschichtung in Trinkwasseranlagen, Schwimmbädern, Kläranlagen, Pipelines, im Bergbau, für Marinebauten, als Beschichtung für den Korrosion- und Verschleissschutz von Fahrzeugen wie Automobilen, Zügen oder Schiffen, oder Rotorblättern von Windturbinen, sowie als Schutzbeschichtung für Kunststoffe aller Art.

### Beispiele

Im Folgenden sind Ausführungsbeispiele aufgeführt, welche die beschriebene Erfindung näher erläutern sollen. Selbstverständlich ist die Erfindung nicht auf diese beschriebenen Ausführungsbeispiele beschränkt.

Als "Normklima" ("NK") wird eine Temperatur von 23±1°C und eine relative Luftfeuchtigkeit von 50±5% bezeichnet.

Die verwendeten Chemikalien waren, sofern nicht anders bezeichnet, von Sigma-Aldrich Chemie GmbH.

**Viskositäten** wurden gemessen bei einer Temperatur von 23 °C mittels Kegel-Platte Rotationsviskosimeter (Anton Paar M302) mit einer Scherrate 50 s⁻¹.

### Verwendete Substanzen und Abkürzungen:

| | |
|---|---|
| IPDI-Oligomer | Isophorondiisocyanat-Oligomere enthaltend Isocyanuratgruppen, NCO-Gehalt 17.3 Gew.%, Vestanat^{®} T 1890/100 von Evonik |
| ED-DMA | 1,2-Ethandiol-dimethacrylat, Sartomer^{®} SR 206, von Arkema |
| BD-DMA | 1,4-Butandiol-dimethacrylat, Sartomer^{®} SR 214, von Arkema |
| TEG-DMA | Triethylenglykol-dimethacrylat, Sartomer^{®} SR 205 H, von Arkema |
| HD-DMA | 1,6-Hexandiol-dimethacrylat, Sartomer^{®} SR 239 EU, von Arkema |
| DD-DMA | 1,10-Decandiol-dimethacrylat, Sartomer^{®} SR 261, von Arkema |
| PEG(200)-DMA | Dimethacrylat von Polyethylenglykol mit Mₙ ca. 200 g/mol, Sartomer^{®} SR 210 HH, von Arkema |
| PEG(600)-DMA | Dimethacrylat von Polyethylenglykol mit Mₙ ca. 600 g/mol, Sartomer^{®} SR 252, von Arkema |
| TMP-TMA | 1,1,1-Trimethylolpropan-trimethacrylat, Sartomer^{®} SR 350 D, von Arkema |
| Polyol-1 | PolyTHF 1000, OH-Zahl 112 mg KOH/g, Terathane^{®} 1000 PTMEG, von Invista |
| Polyol-2 | gesättigtes Polyesterdiol, OH-Zahl 112 mg KOH/g, Oxyester^{®} T 1136, von Evonik |

### Herstellung von Härtern:

### Härter H1 bis H14:

Für jeden Härter wurde das in den Tabellen 1 und 2 angegebene Methacrylat in der angegebenen Menge (in Gewichtsteilen) in einem Rundkolben unter Stickstoffatmosphäre vorgelegt, mit dem IPDI-Oligomer in der angegebenen Menge (in Gewichtsteilen) versetzt, bei 60 °C und mittels Magnetrührer kräftig gerührt und dabei die Zeit gemessen, bis das IPDI-Oligomer vollständig gelöst war. Anschliessend wurde der erhaltene Härter auf Raumtemperatur abgekühlt und unter Feuchtigkeitsausschluss in einem verschlossenen Gebinde aufbewahrt.

In den Tabellen 1 und 2 ist unter **"Löseverhalten"** die benötigte Zeitspanne angegeben, bis das IPDI-Oligomer vollständig in Lösung war. Dabei wird das Löseverhalten zusätzlich anhand folgender Skala bewertet:

| | |
|---|---|
| sehr gut: | vollständiges Lösen des IPDI-Oligomers innerhalb von 3 h |
| gut: | vollständiges Lösen des IPDI-Oligomers innerhalb von 5 h |
| ok: | vollständiges Lösen des IPDI-Oligomers innerhalb von 10 h |
| schlecht: | kein vollständiges Lösen des IPDI-Oligomers innerhalb von 10 h |

Die **Viskosität** der Härter wurde bestimmt bei 23 °C nach 24 h Aufbewahrung im verschlossenen Gebinde bei Raumtemperatur.

Der **NCO-Gehalt** der Härter wurde titrimetrisch bestimmt nach 24 h Aufbewahrung im verschlossenen Gebinde bei Raumtemperatur.

Die Resultate sind in den Tabellen 1 und 2 angegebenen.

Die mit "(Ref.)" bezeichneten Härter **H13 (Ref.)** und **H14 (Ref.)** sind nichterfindungsgemässe Vergleichsbeispiele mit Methacrylaten, welche nicht der Formel (I) entsprechen.

**Tabelle 1: Zusammensetzung und Eigenschaften der Härter H1 bis H7.**

| **Härter** | **H1** | **H2** | **H3** | **H4** | **H5** | **H6** | **H7** |
|---|---|---|---|---|---|---|---|
| ED-DMA | 50 | 40 | - | - | - | - | |
| BD-DMA | - | - | 50 | 45 | 40 | 30 | |
| TEG-DMA | - | - | - | - | - | - | 54 |
| IPDI-Oligomer | 50 | 60 | 50 | 55 | 60 | 70 | 46 |
| Löseverhalten | gut 4 h | gut 5 h | gut 4 h | gut 4 h | gut 4 h | gut 4 h | sehr gut 3 h |
| Viskosität [Pa.s] | 0.32 | 2.67 | 0.35 | 0.79 | 2.94 | 88.6 | 0.45 |
| NCO-Gehalt [Gew.%] | 8.6 | 10.3 | 8.6 | 9.4 | 10.3 | 12.0 | 7.9 |

**Tabelle 2: Zusammensetzung und Eigenschaften der Härter H8 bis H14. "n.m." steht für "nicht messbar" (nicht vollständig gelöst)**

| **Härter** | **H8** | **H9** | **H10** | **H11** | **H12** | **H13 (Ref.)** | **H14 (Ref.)** |
|---|---|---|---|---|---|---|---|
| TEG-DMA | 50 | 40 | - | - | - | - | - |
| HD-DMA | - | - | 40 | - | - | - | - |
| DD-DMA | - | - | - | 40 | - | - | - |
| PEG(200)-DMA | - | - | - | - | 40 | - | - |
| PEG(600)-DMA | - | - | - | - | - | 50 | - |
| TMP-TMA | - | - | - | - | - | - | 50 |
| IPDI-Oligomer | 50 | 60 | 60 | 60 | 60 | 50 | 50 |
| Löseverhalten | sehr gut 3 h | sehr gut 3h | ok 10 h | ok 8 h | ok 8 h | schlecht > 12 h | schlecht > 12 h |
| Viskosität [Pa s] | 0.87 | 7.78 | 4.04 | 8.47 | 14.4 | n.m. | n.m. |
| NCO-Gehalt [Gew.%] | 8.6 | 10.3 | 10.3 | 10.3 | 10.3 | 8.6 | 8.6 |

Aus den Tabellen 1 und 2 ist ersichtlich, dass ED-DMA und BD-DMA (Härter **H1** bis **H6**) ein gutes Löseverhalten zeigten und besonders niedrigviskose Härter ermöglichten, wobei die Viskosität abhängig war von der gelösten Menge IPDI-Oligomer. Weiterhin ist ersichtlich, dass TEG-DMA (Härter **H7** bis **H9**) ein sehr gutes Löseverhalten zeigte und etwas höherviskose Härter ergab, welche aber immer noch gut handhabbar waren. Weiterhin ist ersichtlich, dass HD-DMA, DD-DMA und PEG(200)-DMA noch einsetzbar waren in Bezug auf das Löseverhalten (Härter **H10** bis **H12**), wobei die Viskosität der Härter mit HD-DMA in einem brauchbaren Bereich war, mit DD-DMA etwas höher war und mit PEG(200)-DMA recht hoch war. PEG(600)-DMA und TMP-TMA, welches beide keine Dimethacrylate der Formel (I) sind, zeigten ein schlechtes Löseverhalten, da innerhalb von 12 Stunden bei 60 °C kein vollständiges Lösen des IPDI-Oligomers erfolgte (Härter **H13 (Ref.)** und **H14 (Ref.)).**

### Herstellung von Härtern enthaltend Umsetzungsprodukte mit Polyol:

### Härter H15 bis H17:

Die in der Tabelle 3 angegebenen Inhaltsstoffe wurden unter Stickstoffatmosphäre in den angegebenen Mengen (in Gewichtsteilen) vermischt und bei 80 °C umgesetzt, bis der titrimetrisch bestimmte NCO-Gehalt stabil war. Anschliessend wurde das Reaktionsprodukt abgekühlt und unter Ausschluss von Luftfeuchtigkeit aufbewahrt.

Der **Aspekt** der erhaltenen Härter wurde von Auge beurteilt. Als "klar" wurde ein Härter ohne Trübungen, Schlieren und sichtbaren Inhomogenitäten bezeichnet. Die **Viskosität** der Härter wurde bestimmt bei 23 °C nach 24 h Aufbewahrung im verschlossenen Gebinde bei Raumtemperatur.

Der **NCO-Gehalt** der Härter wurde titrimetrisch bestimmt nach 24 h Aufbewahrung im verschlossenen Gebinde bei Raumtemperatur.

Die Eigenschaften der Härter **H15** bis **H17** sind in Tabelle 3 angegeben.

**Tabelle 3: Zusammensetzung und Eigenschaften der Härter H15 bis H17.**

| **Härter** | **H15** | **H16** | **H17** |
|---|---|---|---|
| Härter **H4** | 93.7 | 88.1 | 88.1 |
| Polyol**-1** | 6.3 | 11.9 | - |
| Polyol-**2** | - | - | 11.9 |
| Aspekt | klar | klar | klar |
| Viskosität (23 °C) [Pa s] | 0.9 | 2.3 | 3.4 |
| NCO-Gehalt [Gew.%] | 7.5 | 6.2 | 6.0 |

### Herstellung von härtbaren Beschichtungen:

### Zusammensetzung Z1 (gespritzte Polyharnstoff-Beschichtung):

Es wurde eine erste Komponente hergestellt, indem die folgenden Inhaltsstoffe in den angegebenen Mengen in Gewichtsteilen (GT) in einem Dissolver unter Vakuum und Ausschluss von Luftfeuchtigkeit vermischt und während 14 Tagen in einer feuchtigkeitsdichten Verpackung aufbewahrt wurden:

| | |
|---|---|
| 20.0 GT | Dimerfettsäure basiertes Diamin (Priamine^{®} 1075, Amin-Equivalentgewicht 274 g/eq, von Cargill), |
| 25.0 GT | Poly(oxy-1,2-propylen)diamin (Jeffamine^{®} D-2000, Amin-Equivalentgewicht 1028 g/eq, von Huntsman, |
| 5.3 GT | N,N'-Diisobutylidenisophorondiamin (Vestamin^{®} A 139, Aldimin-Equivalentgewicht 140 g/eq, von Evonik) |
| 30.9 GT | Aluminiumtrihydroxid Pulver (ATH) |
| 10.0 GT | Pigmentpaste |
| 4.0 GT | PTFE Pulver |
| 3.6 GT | Additive (UV-Stabilisatoren, Netzmittel, Rheologie-Additiv, Entschäumer) |
| 1.0 GT | Epoxysilan |
| 0.2 GT | Dibutylzinndiacetat |

Die Viskosität der ersten Komponente bei 23 °C betrug 0.83 Pa s. Die Dichte der ersten Komponente betrug 1.2 g/ml.

Als zweite Komponente wurde der vorgängig hergestellte Härter **H15** eingesetzt, mit Dichte 1.08 g/ml, Viskosität 0.9 Pas und NCO-Gehalt 7.5 Gew.%.

Für die Applikation wurden die beiden Komponenten je auf eine Temperatur von 70 °C aufgewärmt, mittels einer Spritzapparatur im Volumenverhältnis 1:1 vermischt und auf eine ebene Bodenfläche in einer Schichtdicke von 2 mm appliziert. Die Applikation erfolgte mittels einer Hochdruck-Dosiermaschine vom Typ GAMA Evolution VR mit einer Mischkammer mit Gegenstrominjektion und einer Rundstrahldüse. Die Austragungsleistung betrug 95 g/s, der Druck im Sprühbetrieb war ca. 185 bis 190 bar, die Umgebungsbedingungen waren 20 °C und 50 % relative Luftfeuchtigkeit.

Die Verarbeitbarkeit der Polyharnstoff-Beschichtung war sehr gut. Die vermischte Beschichtung konnte ohne Anhärtungen in der Spritzdüse und ohne "Rüsselbildung" (Aufbau einer ausgehärteten Schicht an der Spritzdüse) appliziert werden und die applizierte Beschichtung war innerhalb einiger Minuten soweit ausgehärtet, dass sie begehbar war. Die erhaltene ausgehärtete Beschichtung zeigte eine homogene, ebenmässige, nur leicht unebene Oberfläche ohne Muster, Streifen, Wellen, Krater oder Blasen.

Zur Bestimmung der mechanischen Eigenschaften wurde die Beschichtung in einer Schichtdicke von 2 mm auf eine Polyethylenfolie appliziert und nach der Aushärtung von dieser abgelöst. Nach einer Lagerung während 7 Tagen im Normklima betrug die Zugfestigkeit 20 MPa und die Bruchdehnung 5 %, bestimmt an ausgestanzten Prüfkörpern vom Typ S2 gemäss DIN 53504.

Die Shore D Härte betrug 64, bestimmt gemäss ISO 7619-1 an gespritzten Prüfkörpern mit einer Schichtdicke von 5 mm nach einer Lagerzeit von 7 Tagen im Normklima.

Der Wert für die Taber Abrasion betrug 600 mg Gewichtsverlust, bestimmt mit einem Taber 5151 Abrasionsgerät, CS10 Abrasionsrädern bei 1 kg Gewichtsbeladung und 500 Zyklen, an einem mit einer Schichtdicke von 2 mm beschichteten Aluminiumblech (100 mm x 100 mm ) nach einer Lagerzeit von 7 Tagen im Normklima.

### Zusammensetzungen Z2 bis Z4: (handverarbeitbare Polyharnstoff-Beschichtungen)

Als erste Komponente wurde Sikafloor^{®} TC 681 Komponente A (von Sika) eingesetzt. Sikafloor^{®} TC 681 ist eine zweikomponentige, schnellhärtende Polyaspartic-Versiegelung für Parkdeckbeschichtungen. Die Komponente A basiert auf einem Diamin mit zwei sekundären Amingruppen (Desmophen^{®} NH 1420 von Covestro) und enthält Füllstoffe und Pigmente. Das Amin-Equivalentgewicht der Komponente A beträgt 975 g/eq, die Dichte 1.74 g/cm³.

Als zweite Komponente wurden gemäss den Angaben in Tabelle 4 der vorgängig hergestellte Härter **H7** bzw. **H8** eingesetzt, sowie als Referenz Sikafloor^{®} TC 681 Komponente B (von Sika). Sikafloor^{®} TC 681 Komponente B basiert auf einem teilweise mit Monol umgesetzten Trimer von 1,6-Hexandiisocyanat und enthält Xylol.

Die beiden Komponenten wurden im in Tabelle 4 angegebenen Mischungsverhältnis dosiert und von Hand mittel einem Spatel innig vermischt, bis eine homogen aussehende Flüssigkeit entstanden war. Diese wurde unverzüglich folgendermassen geprüft:
Die **Mischviskosität** wurde 5 min nach Ende des Mischens bei 23 °C bestimmt.

Der **Geruch** wurde durch Riechen in einem Abstand von 30 cm an der frisch vermischten Zusammensetzung beurteilt.

Die **Verarbeitungszeit** wurde bestimmt, indem eine frisch vermischte Menge von 25 g in einem offenen Gefäss mit einem Spatel regelmässig bewegt wurde, bis die Masse gelierte.

Die **Zeit bis zur Klebefreiheit** wurde bestimmt, indem eine in einer Schichtdicke von 2 mm frisch applizierte Beschichtung nach dem Gelieren regelmässig berührt wurde, bis die Oberfläche der Beschichtung nicht mehr klebrig war. In Klammer ist zusätzlich angegeben, ob sich die klebfreie Beschichtung beim Berühren zu diesem Zeitpunkt hart oder weich anfühlte.

Die **Shore D** Härte wurde an Prüfkörpern mit einer Schichtdicke von 5 mm nach einer Lagerzeit 1 d bzw. 7 d im Normklima gemäss ISO 7619-1 bestimmt.

Die **Zugfestigkeit** und die **Bruchdehnung** wurden an gestanzten Prüfkörpern vom Typ S2 mit einer Dicke von 2 mm nach Aushärtung während 7 Tagen im Normklima gemäss DIN 53504 bestimmt.

**Tabelle 4: Zusammensetzung und Eigenschaften der Zusammensetzungen Z2 bis Z4.**

| **Zusammensetzung** | | **Z2** | **Z3** | **Z4 (Ref.)** |
|---|---|---|---|---|
| erste Komponente | | TC 681 A | TC 681 A | TC 681 A |
| zweite Komponente | | Härter **H7** | Härter **H8** | TC 681 B |
| Mischungsverhältnis (Gewicht) | | 100 / 86 | 100/79 | 100 / 67 |
| Mischviskosität [Pa s] | | 1.10 | 1.82 | 0.87 |
| Geruch | | kaum Geruch | kaum Geruch | stark nach Lösemittel |
| Verarbeitungszeit [min] | | 153 | 108 | 104 |
| Zeit bis zur Klebefreiheit | | 3 h (hart) | 3 h (hart) | 3 h (weich) |
| Shore D | (1d) | 29 | 47 | 14 |
| | (7d) | 54 | 60 | 34 |
| Zugfestigkeit [MPa] | | 11.0 | 14.9 | 1.4 |
| Bruchdehnung | | 72 % | 26 % | 88 % |

### Zusammensetzung Z5: (handverarbeitbare Polyurethan-Beschichtung)

Als erste Komponente wurde Sikafloor^{®} 3000 Komponente A (von Sika) eingesetzt. Sikafloor^{®} 3000 ist eine zweikomponentige, hochelastische Polyurethan-beschichtung für Fussböden. Die Komponente A basiert auf Polyetherpolyolen und Ricinusöl und enthält Füllstoffe und Pigmente.

Als zweite Komponente wurde der vorgängig hergestellte Härter **H2** eingesetzt. Die beiden Komponenten wurden im in Tabelle 5 angegebenen Mischungsverhältnis dosiert und von Hand mittel einem Spatel innig vermischt, bis eine homogen aussehende Flüssigkeit entstanden war und unverzüglich folgendermassen geprüft:
Der **Geruch,** die **Verarbeitungszeit** und die **Zeit bis zur Klebefreiheit** wurden wie für Zusammensetzung **Z2** beschrieben bestimmt.

Die **Shore A** Härte wurde an Prüfkörpern mit einer Schichtdicke von 5 mm nach einer Lagerzeit von 14 d im Normklima gemäss ISO 7619-1 bestimmt.

Die **Zugfestigkeit** und die **Bruchdehnung** wurden an gestanzten Prüfkörpern vom Typ S2 mit einer Dicke von 2 mm nach Aushärtung während 14 Tagen im Normklima gemäss DIN 53504 bestimmt.

**Tabelle 5: Zusammensetzung und Eigenschaften der Zusammensetzung Z5.**

| **Zusammensetzung** | **Z5** |
|---|---|
| erste Komponente | Sikafloor^{®} 3000 Komponente A |
| zweite Komponente | Härter **H2** |
| Mischungsverhältnis (Gewicht) | 100/75.3 |
| Geruch | kaum Geruch |
| Verarbeitungszeit [min] | 90 |
| Zeit bis zur Klebefreiheit | 24 h |
| Shore A (14d) | 74 |
| Zugfestigkeit [MPa] | 5.5 |
| Bruchdehnung | 80 % |

## Patentansprüche

1. Härter auf Basis von Isophorondiisocyanat-Oligomeren, umfassend bezogen auf den gesamten Härter
- 25 bis 70 Gewichts-% Isophorondiisocyanat-Oligomere, gegebenenfalls in Form von Umsetzungsprodukten mit mindestens einem Polyol,
- 25 bis 75 Gewichts-% Dimethacrylate der Formel (I), 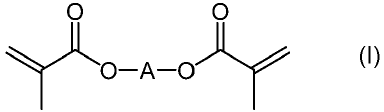 wobei A für einen zweiwertigen Alkylenrest mit 2 bis 12 C-Atomen oder für einen Polyetherrest mit 4 bis 14 C-Atomen steht, und
- 0 bis 30 Gewichts-% weitere Substanzen.

2. Härter gemäss Anspruch 1, **dadurch gekennzeichnet, dass** die Isophorondiisocyanat-Oligomere Isocyanuratgruppen enthalten.

3. Härter gemäss einem der Ansprüche 1 oder 2, **dadurch gekennzeichnet, dass** das Dimethacrylat der Formel (I) ausgewählt ist aus der Liste bestehend aus 1,2-Ethandiol-dimethacrylat, 1,2-Propandiol-dimethacrylat, 1,3-Propandiol-dimethacrylat, 1,4-Butandiol-dimethacrylat, 1,5-Pentandiol-dimethacrylat, Neopentylglykol-dimethacrylat, 1,6-Hexandiol-dimethacrylat, 1,8-Octandiol-dimethacrylat, 1,10-Decandiol-dimethacrylat, 1,12-Dodecandiol-dimethacrylat, Diethylenglykol-dimethacrylat, Triethylenglykol-dimethacrylat, Tetraethylenglykol-dimethacrylat, Dipropylenglykol-dimethacrylat, Tripropylenglykol-dimethacrylat und Tetrapropylenglykol-dimethacrylat.

4. Härter gemäss einem der Ansprüche 1 bis 3, **dadurch gekennzeichnet, dass** der NCO-Gehalt bezogen auf den gesamten Härter im Bereich von 4.3 bis 12.1 Gewichts-%, insbesondere 5 bis 11 Gewichts-%, liegt.

5. Härter gemäss einem der Ansprüche 1 bis 4, **dadurch gekennzeichnet, dass** die Isophorondiisocyanat-Oligomere anteilig in Form von Umsetzungsprodukten mit mindestens einem Diol mit einer OH-Zahl von 28 bis 280 mg KOH/g enthalten sind.

6. Härter gemäss Anspruch 5, **dadurch gekennzeichnet, dass** das Diol ausgewählt ist aus der Liste bestehend aus Polyetherdiolen, Polyesterdiolen und Polycarbonatdiolen.

7. Härter gemäss einem der Ansprüche 1 bis 6, **dadurch gekennzeichnet, dass** bezogen auf den gesamten Härter
- 40 bis 65 Gewichts-% Isophorondiisocyanat-Oligomere, gegebenenfalls in Form von Umsetzungsprodukten mit mindestens einem Diol mit einer OH-Zahl von 28 bis 280 mg KOH/g,
- 30 bis 60 Gewichts-%, insbesondere 40 bis 55 Gewichts-%, Dimethacrylate der Formel (I), und
- 0 bis 20 Gewichts-%, bevorzugt 0 bis 10 Gewichts-%, insbesondere 0 bis 5 Gewichts-%, weitere Substanzen
enthalten sind.

8. Härter gemäss einem der Ansprüche 1 bis 7, **dadurch gekennzeichnet, dass** bezogen auf den gesamten Härter weniger als 1 Gewichts-% organische Lösemittel mit einem Siedepunkt bei Normaldruck von weniger als 250 °C enthalten sind.

9. Verfahren zum Herstellen des Härters gemäss einem der Ansprüche 1 bis 8, umfassend die Schritte
(i) Vorlegen des Dimethacrylats der Formel (I),
(ii) Zugeben der Isophorondiisocyanat-Oligomere,
(iii) Rühren der Mischung, bis die Isophorondiisocyanat-Oligomere vollständig gelöst sind,
(iv) gegebenenfalls Zugeben von mindestens einem Polyol und Reagieren lassen, bis alle OH-Gruppen umgesetzt sind.

10. Verwendung des Härters gemäss einem der Ansprüche 1 bis 8 zum Aushärten einer Zusammensetzung enthaltend Reaktivgruppen ausgewählt aus Hydroxylgruppen, primären Amingruppen, sekundären Amingruppen, Aldimingruppen, Ketimingruppen und Oxazolidingruppen.

11. Härtbare Beschichtung umfassend
- eine erste Komponente enthaltend mindestens ein Polyol und/oder mindestens ein Polyamin mit mindestens zwei primären oder sekundären Amingruppen, und
- eine zweite Komponente enthaltend den oder bestehend aus dem Härter gemäss einem der Ansprüche 1 bis 8.

12. Härtbare Beschichtung gemäss Anspruch 11, **dadurch gekennzeichnet, dass** die erste Komponente mindestens ein Polyamin mit mindestens zwei primären oder sekundären Amingruppen enthält.

13. Härtbare Beschichtung gemäss einem der Ansprüche 11 bis 12, **dadurch gekennzeichnet, dass** die erste Komponente mindestens einen Kupfer-, Eisen- oder Zink-Katalysator enthält.

14. Härtbare Beschichtung gemäss einem der Ansprüche 11 bis 13, **dadurch gekennzeichnet, dass** mindestens ein weiterer Bestandteil ausgewählt aus der Liste bestehend aus Katalysatoren, Füllstoffen, Pigmenten, Haftvermittlern, Stabilisatoren, Entschäumern und Netzmitteln enthalten ist.

15. Ausgehärtete Beschichtung, erhalten aus der härtbaren Beschichtung gemäss einem der Ansprüche 11 bis 14 nach dem Vermischen der Komponenten, Applizieren der vermischten flüssigen Zusammensetzung auf mindestens ein Substrat und anschliessendem Aushärten.
